# EUROPÄISCHE PATENTSCHRIFT

(11) **EP 2 789 665 B1**
(45) Veröffentlichungstag und Bekanntmachung des Hinweises auf die Patenterteilung: **02.05.2018**
(21) Anmeldenummer: 14157709.8
(22) Anmeldetag: 04.03.2014
(51) Int. Cl.: C09J 139/04, C09J 139/06, C08K 5/54

(54) **Silan-Primer zur Verbesserung der Adhäsion von Klebebändern auf hydrophilen Oberflächen, insbesondere Glasoberflächen**
Silane primers for improving the adhesion of adhesive tapes on hydrophilic surfaces, in particular glass surfaces
Primaire au silane pour l'amélioration de l'adhérence de bandes adhésives sur des surfaces hydrophiles, notamment des surfaces vitrées

(30) Priorität: 11.04.2013 DE 102013206369
(43) Veröffentlichungstag der Anmeldung: 15.10.2014
(73) Patentinhaber: tesa SE, 22848 Norderstedt (DE)
(72) Erfinder: Dietze, Sebastian, 22307 Hamburg (DE); Dollase, Thilo, 22397 Hamburg (DE); Ellringmann, Kai, 22589 Hamburg (DE); Kupsky, Marco, 25451 Quickborn (DE); Schümann, Uwe, 25421 Pinneberg (DE)

(56) Entgegenhaltungen:
- WO-A1-97/00914
- WO-A1-97/00922
- WO-A1-99/01520
- US-A1- 2012 328 873
- US-B1- 6 372 895

## Beschreibung

Die vorliegende Erfindung betrifft eine Primer-Zusammensetzung für die Verbesserung der Adhäsion von Klebebändern auf hydrophilen Oberflächen, insbesondere Glasoberflächen, wobei die Primer-Zusammensetzung vorzugsweise weitere funktionale, füllstoffartige Stoffe enthalten können soll, ohne dass die haftvermittelnde Wirkung des Primers dadurch beeinträchtig wird.

### Stand der Technik

Primer, oft auch Haftvermittler oder Adhesion Promoter genannt, sind vielfach in Form von kommerziellen Produkten oder aus der technischen Literatur bekannt. Eine Übersicht über die in Primer-Formulierungen verwendbaren Stoffe bzw. Stoffklassen findet sich in J.Bielemann, Lackadditive (1998), Kap. 4.3., S.114-129.

Primerzusammensetzungen werden in einer Vielzahl von Patentschriften offenbart, jedoch werden nur in wenigen Schriften Primer beschrieben, mit denen eine Haftungsverbesserung von Klebebändern erreicht werden soll.

In der Schrift WO 2008/094721 A1 wird im Zusammenhang mit Klebebandanwendungen eine Primerzusammensetzung auf Basis eines maleinsäureanhydridmodifizierten Polyolefins und eines organischen Diamins vorgeschlagen, mit der eine Haftungsverbesserung auf polyolefinbasierten Materialien erzielt werden soll.

In der JP 2008-156566 A wird für Klebebandanwendungen eine Primerzusammensetzung auf Basis eines azidischen Acrylat-Polymers und eines fluorhaltigen Copolymers offenbart.

Zur Verbesserung der Haftung eines Klebebandes auf melaminharzangestrichenen Substraten schlägt die WO 02/100961 A1 eine Primerzusammensetzung vor, die ein gepfropftes Copolymer eines Acrylat-Copolymers, gepfropft mit einer Aminoalkylgruppe, die endständige primäre Aminogruppen enthält, weiterhin ein Acrylat-Copolymer mit Carboxylgruppen in der molekularen Kette und ein Lösungsmittel enthält.

Die WO 03/052021 A1 beschreibt eine Primerzusammensetzung, die ein Polydiorganosiloxan-Polyharnstoff mit elektronenreichen Gruppen enthält und die Gestalt eines Primers, eines Klebstoffs, eines Haftklebstoffs oder eines anderen Beschichtungsstoffes haben kann. Auch diese Primerzusammensetzung wird in Zusammenhang mit Klebebandanwendungen genannt.

In den Schriften EP 833 865 B1, EP 833 866 B1, EP 739 383 B1 und US 5,602,202 werden Primerzusammensetzungen auf Basis von Mischungen aus Styrol- / Dien-Blockcopolymeren oder Styrol- / hydriertem Dien-Blockcopolymeren und ausgewählten Polyacrylaten beschrieben, die die Haftung von beidseitig haftklebrigen geschäumten Klebebändern auf sowohl niederenergetischen als auch höherenergetischen Oberflächen verbessern sollen.

Ein Primer, der für die Verbesserung der Adhäsion von Klebebändern auf schwer verklebbaren Substraten, insbesondere auf verzinktem Stahl sowie auf thermoplastischen Elastomeren auf Olefinbasis, wie z.B. PP/EPDM geeignet ist, ist in der DE 10 2011 077 510 A1 offenbart.

US 6,372,895 B1 beschreibt einen Primer auf Basis eines Synthesekautschuks, eines chlorierten Polypropylens, eines Epoxidharzes, eines Silan-Haftvermittlers, eines Acrylat-Copolymers und eines Chelats.

Keine der genannten Schriften befasst sich jedoch mit der Haftvermittlung auf Glas.

Zur Haftvermittlung auf hydrophilen Untergründen wie z.B. Glas kommen häufig Silan-Primer bzw. Silan-Haftvermittler oder Adhesion Promoter zum Einsatz. Solche sind zum Beispiel beschrieben in der DE 10 2009 007 930 A1 oder der DE 10 2007 030 196 A1, ferner in der EP 577 014 A1, der EP 1 693 350, EP 1 730 247, US 2008 0245 271, US 2008 023 425 oder der WO 2008/025846.

Die in den genannten Schriften offenbarten Verbindungen eignen sich jedoch allenfalls mäßig für die Verbesserung der Adhäsionskraft von Klebebändern auf Glas, da sie keine geeigneten Komponenten enthalten, die die Adhäsion zu einem Haftklebstoff verbessern, insbesondere die Adhäsion zu einem Haftklebstoff aus Basis eines Copolymerisats aus Acrylsäureestern und optional Acrylsäure.

Wenn zusätzlich die Einarbeitung von funktionalen Füllstoffen in den Primer gewünscht ist, versagen die Verbindungen der genannten Schriften vollständig, da die sehr dünnflüssigen Dispersionen, Lösungen oder Zubereitungen nicht in der Lage sind, solche Füllstoffe aufzunehmen.

Die US 6,646,048 B2 offenbart eine Primerzusammensetzung aus einem reaktiven Acrylharz, das aus zwei verschiedenen Methacrylaten, von denen mindestens eines eine Seitenkette mit mindestens einem aromatischen Ring aufweist, besteht, einer Silanverbindung, einem Epoxidharz vom Typ Bisphenol A und Ruß. Diese Primerzusammensetzung aus einem reaktiven Acrylharz und einem Silan eignet sich zwar für die Haftungsverbesserung einer Urethan-basierten Dichtmasse bzw. eines Reaktivklebstoffes auf Glas, für die Haftverbesserung eines Haftklebstoffbandes auf Glas ist sie jedoch gänzlich ungeeignet. Anders als eine Urethan-basierte Dichtmasse bzw. ein Reaktivklebstoff, der auch noch nach der Applikation vernetzt und so reaktiv eine chemische Verbindung mit dem Primer eingehen kann, ist die Polymerbasis der Haftklebstoffe auf Klebebändern während der Applikation des Klebebandes nicht mehr reaktiv, so dass durch die Primerzusammensetzung der US-Schrift keine gewünschte Haftverbesserung erreicht wird.

Haftklebmassen auf Basis von Acrylat-N-Vinylpyrrolidon-Copolymeren sind in US 2012/0328873 A1 und WO 99/01520 A1 offenbart.

### Aufgabe der Erfindung

Aufgabe der Erfindung ist daher die Bereitstellung eines Primers zur Verbesserung der Adhäsion von Klebebändern, insbesondere solchen mit einem Haftklebstoff auf Basis von thermisch vernetzten Copolymerisaten aus Acrylsäureestern und Acrylsäure, auf hydrophilen Oberflächen wie insbesondere Glas. Dabei soll der Primer vorzugsweise die Einarbeitung von funktionalen Füllstoffen ermöglichen, ohne dass hierdurch die haftvermittelnde Wirkung des Primers verloren geht oder messbar reduziert wird.

### Lösung der Aufgabe

Gelöst wird diese Aufgabe durch einen Primer gemäß Hauptanspruch. Gegenstand der Unteransprüche sind dabei vorteilhafte Weiterbildungen des Primers, eine Verwendungsmöglichkeit sowie ein Verfahren zur Herstellung einer haftvermittelnden Schicht aus dem Primer.

Danach betrifft die Erfindung einen Primer, umfassend eine in einem oder mehreren Lösemitteln gelöste oder dispergierte Mischung aus
- einem durch Copolymerisation, vorzugsweise radikalische Copolymerisation, erhaltenen Copolymerisat aus Vinylcaprolactam und/oder Vinylpyrrolidon und einem oder mehreren der folgenden Monomere:
   a) einem Acrylsäureester eines linearen, primären Alkohols mit 2 bis 10 Kohlenstoffatomen im Alkylrest des Alkohols,
   b) einem Acrylsäureester eines verzweigten, nichtzyklischen Alkohols mit 4 bis 12 Kohlenstoffatomen im Alkylrest des Alkohols,
   c) Acrylsäure,
- einem oder mehreren organofunktionellen Silanen,
der dadurch gekennzeichnet ist, dass eines der Monomere, aus denen das Copolymerisat aufgebaut ist, Butylacrylat ist.

Dabei bezeichnet "Vinylcaprolactam" N-Vinylcaprolactam (CAS-Nr. 2235-00-9) und "Vinylpyrrolidon" N-Vinyl-2-pyrrolidon (CAS-Nr. 88-12-0).

Unter einem organofunktionellem Silan werden in dieser Schrift Verbindungen der allgemeinen Formel (R¹O)₃Si-R²X oder (R¹O)₂(R³)Si-R²X verstanden. Typische Beispiele für den Substituenten (R¹O) sind Methoxy-, Ethoxy-, 2-Methoxyethoxy- oder Acetoxy-Gruppen. Der Substituent R³ ist typischerweise eine Methylgruppe. Typische in Frage kommende Substituenten R²X sind die Gruppen 3-Glycidoxypropyl-, vinyl-, methacryloxymethyl-, 3-methacryloxypropyl-, methyl, isooctyl, hexadecyl-, cyclohexyl- oder phenyl-, um nur einige Beispiele zu nennen.

Überraschenderweise wurde gefunden, dass solche Primer eine exzellente Haftung auf hydrophilen Substraten wie insbesondere Glas aufweisen. Klebebänder, insbesondere solche mit polaren Haftklebstoffen, wie vor allem Haftklebstoffe auf Basis von Polyacrylsäureester, haften ausgezeichnet auf dem Primer. Somit ist der Primer ein exzellenter Haftvermittler für Verklebungen von Klebebändern auf Glas.

Darüber hinaus ist es möglich, den Primer mit Füllstoffen zu füllen, ohne dass dessen haftvermittelnde Wirkung dadurch verloren ginge oder messbar reduziert würde. Bei einigen Füllstoffen kommt es selbst bei einem Füllstoffanteil, der einer mehrfachen Konzentration der Silan-Konzentration entspricht, nicht zu einer Beeinträchtigung der haftvermittelnden Wirkung. Vielmehr haften Klebebänder auch mit dieser Füllstoffkonzentration im Primer noch so gut, dass es beim Abschälversuch bei Verklebungen auf Glas zum kohäsiven Versagen innerhalb des Klebebandes kommt. Wird beispielsweise ein Farbpigment als Füllstoff verwendet, kann angesichts dieser möglichen hohen Füllstoffkonzentration Blickdichtigkeit erzielt werden, d.h. der Primer kann blickdicht eingefärbt werden.

### Nähere Beschreibung der Erfindung:

Unter einem Primer wird in dieser Schrift im Einklang mit DIN EN ISO 4618 ein Beschichtungsstoff zum Herstellen einer Grundbeschichtung verstanden. Allgemein wird ein Primer oder Beschichtungsstoff auf die Oberfläche eines Substrates aufgetragen, danach kommt es zur Filmbildung durch Verdunsten des Lösemittels und/oder durch einen anderen chemischen oder physikalischen Härtungs- oder Filmbildungsprozess, und anschließend kann auf die so hergestellte Schicht ein weiterer, anderer Stoff, zum Beispiel ein Lack, eine Farbe, ein Klebstoff oder ein Klebeband aufgebracht werden. Voraussetzung für eine haftvermittelnde Wirkung eines Primers ist, dass einerseits eine sehr gute Haftung der Primerschicht zum Substrat, dessen Oberfläche in dieser Schrift auch als Untergrund bezeichnet wird, erzielt wird, und andererseits auf der hergestellten Primerschicht der darauf aufzubringende weitere, andere Stoff ebenfalls sehr gut haftet. Ein Primer hat eine optimale haftvermittelnde Wirkung, wenn es beim Versuch, den auf den Primer aufgebrachten Stoff oder das auf den Primer aufgebrachten Klebprodukt, zum Beispiel das Klebeband, abzuschälen, zum kohäsiven Versagen innerhalb des Stoffes, des Klebproduktes bzw. des Klebebandes kommt oder wenn es dabei zur Zerstörung des Substrates kommt, auf dem der Primer zuvor aufgetragen wurde. Wenn die zum Abschälen des auf den Primer aufgebrachten Stoffes, Klebproduktes oder Klebebandes erforderlichen Kräfte höher sind, als sie es sind, wenn kein Primer verwendet wird, ist eine Haftverbesserung bzw. eine Verbesserung der Adhäsionskraft gegeben. Je höher diese Kräfte sind, desto stärker ist die Haftverbesserung bzw. die Verbesserung der Adhäsionskraft.

Ein Lösemittel im Sinne dieser Schrift ist jede bekannte Flüssigkeit, die geeignet ist, die im Hauptanspruch offenbarte Mischung zu lösen oder zumindest fein zu verteilen. Bevorzugte erfindungsgemäße Lösemittel sind organische Lösemittel, wie zum Beispiel Alkohole, Ester, Ketone, aliphatische oder aromatische Kohlenwasserstoffe sowie halogenierte Kohlenwasserstoffe, um nur einige Beispiele zu nennen. Wasser oder andere anorganische Lösemittel sind ebenfalls vom Erfindungsgedanken eingeschlossen.

Unter einer dispergierten Mischung wird in dieser Schrift eine feinverteilte, homogene Mischung verstanden. Der Grad der Feinverteilung und Homogenität wird nicht streng definiert, er muss aber ausreichend sein, dass es nach dem Beschichten zur Ausbildung einer geschlossenen Schicht kommt und die Größe der nicht auf molekularer Ebene gelösten Agglomerate oder Aggregate genügend gering ist, dass die Funktion der Primerschicht als haftvermittelnde Schicht gewährleistet ist.

Das wesentliche Merkmal der im erfindungsgemäßen Primer enthaltenen Mischung ist, dass diese Mischung zumindest ein Copolymerisat, vorzugsweise erhältlich durch radikalische Copolymerisation, folgender Monomere umfasst:
Vinylcaprolactam und/oder Vinylpyrrolidon und eines oder mehrere der folgenden Monomere:
   a) einen Acrylsäureester eines linearen, primären Alkohols mit 2 bis 10 Kohlenstoffatomen im Alkylrest des Alkohols,
   b) einen Acrylsäureester eines verzweigten, nichtzyklischen Alkohols mit 4 bis 12 Kohlenstoffatomen im Alkylrest des Alkohols,
   c) Acrylsäure,
   wobei eines der Monomere, aus denen das Copolymerisat aufgebaut ist, Butylacrylat ist und die Summe aus Vinylcaprolactam und/oder Vinylpyrrolidon sowie der Komponenten a) bis c) vorteilhaft - bei mehreren Copolymerisaten jeweils - 100 Masseprozent des Copolymerisats ausmachen.

Besonders vorteilhaft ist ein vorstehend beschriebener Primer, bei dem das Copolymerisat ein Haftklebstoff ist.

Unter einem Haftklebstoff wird in dieser Schrift wie im allgemeinen Sprachgebrauch üblich ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden, In manchen Fällen, abhängig von der genauen Art des Haftklebstoffs, der Temperatur und der Luftfeuchtigkeit sowie des Substrats, reicht die Einwirkung eines kurzfristigen, minimalen Drucks, der über eine leichte Berührung für einen kurzen Moment nicht hinausgeht, um
den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen.

Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des zu betrachtenden Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.
Der Speichermodul G' ist wie folgt definiert: G' = (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) •sin(δ) (τ = Schubspannung, γ = Deformation, δ = Phasenwinkel = Phasenverschiebung zwischen Schubspannungs- und Deformationsvektor).

Ein Stoff gilt im Allgemeinen als haftklebrig und wird im Sinne dieser Schrift als haftklebrig definiert, wenn bei Raumtemperatur, hier definitionsgemäß bei 23°C, im Deformationsfrequenzbereich von 10⁰ bis 10¹ rad/sec, G' zumindest zum Teil im Bereich von 10³ bis 10⁷ Pa liegt und wenn G" ebenfalls zumindest zum Teil in diesem Bereich liegt. Zum Teil heißt, dass zumindest ein Abschnitt der G'-Kurve innerhalb des Fensters liegt, das durch den Deformationsfrequenzbereich von einschließlich 10⁰ bis einschließlich 10¹ rad/sec (Abszisse) sowie den Bereich der G'-Werte von einschließlich 10³ bis einschließlich 10⁷ Pa (Ordinate) aufgespannt wird, und wenn zumindest ein Abschnitt der G"-Kurve ebenfalls innerhalb dieses Fensters liegt.

Haftklebstoffe, die Vinylcaprolactam und/oder Vinylpyrrolidon im Copolymerisat enthalten, weisen üblicherweise nur durchschnittliche Klebeeigenschaften auf. Umso überraschender war es, dass im Rahmen der vorliegenden Erfindung gefunden wurde, dass ein Primer, der als Haftklebstoff ein erfindungsgemäßes Copolymerisat mit Vinylcaprolactam und/oder Vinylpyrrolidon als Monomerkomponenten enthält, als Primer herausragende haftvermittelnde Eigenschaften aufweist und eine sehr feste Bindung von Klebebändern zu dem hydrophilen Substrat, insbesondere Glas, herstellt.

Ein Primer, dessen Copolymerisat nur die im Hauptanspruch genannten Komponenten aufweist, d.h. nur aus diesen Komponenten besteht, ohne dass weitere copolymerisierbare Monomere enthalten sind, und bei dem das Copolymerisat ein Haftklebstoff ist, ist besonders geeignet und weist besonders gute haftvermittelnde Eigenschaften auf. In einem solchen Copolymerisat beschränkt sich das Copolymerisat somit auf Vinylcaprolactam und/oder Vinylpyrrolidon sowie die Komponenten a) bis c), so dass dem Copolymerisat keine weiteren copolymerisierbaren Monomere außer linearen Acrylsäureestern mit 2 bis 10 C-Atomen im Alkylrest des Alkohols, verzweigten nichtzyklischen Acrylsäureestern mit 4 bis einschließlich 12 Kohlenstoffatomen im Alkylrest des Alkohols und Acrylsäure zugrunde liegen. Der Haftklebstoff als Bestandteil des erfindungsgemäßen Primers zeichnet sich dadurch aus, dass auf die Anwesenheit anderer - insbesondere weich machender - Comonomere und Komponenten als den genannten verzichtet werden kann. So kann beispielsweise vollständig auf Comonomere mit zyklischen Kohlenwasserstoffbausteinen verzichtet werden.

Lineare Alkylsäureester mit 2 bis 10 C-Atomen im Alkylrest sind Ethylacrylat, n-Propylacrylat, n-Butylacrylat, n-Pentylacrylat, n-Hexylacrylat, n-Heptylacrylat, n-Octylacrylat, n-Nonylacrylat, n-Decylacrylat.

Verzweigte nichtzyklische Acrylsäureester mit 4 bis einschließlich 12 Kohlenstoffatomen im Alkylrest des Alkohols werden bevorzugt ausgewählt aus der Gruppe bestehend aus 2-Ethylhexylacrylat (EHA), 2-Propylheptylacrylat, Isooctylacrylat, iso-Butylacrylat, isoAmylacrylat und/oder iso-Decylacrylat. Besonders vorteilhaft hat sich gezeigt, wenn als verzweigte nichtzyklische Acrylsäureester 2-Ethylhexylacrylat (EHA), 2-Propylheptylacrylat und/oder Isooctylacrylat (genauer: die Acrylsäureester, bei denen die Alkoholkomponente auf ein Gemisch primärer Isooctanole zurückzuführen ist, also auf solche Alkohole, die aus einem Isohepten-Gemisch durch Hydroformylierung u. anschließende Hydrierung gewonnen werden können) eingesetzt werden.

Sehr bevorzugt ist ein Haftklebstoff, dessen Copolymerisat auf Vinylcaprolactam und/oder Vinylpyrrolidon und n-Butylacrylat beruht. Als weiteres Monomer ist Vinylcaprolactam besonders bevorzugt. Ein besonders geeignetes Copolymerisat besteht daher aus den beiden Komponenten Vinylcaprolactam und n-Butylacrylat.

In einer anderen vorteilhaften Ausgestaltung der vorliegenden Erfindung weist das Copolymerisat bis zu 10 Masseprozent weiterer copolymerisierbarer Monomere, bezogen auf die Summe der Monomere, auf.

Als optional bis zu 10 Masseprozent eingesetzte weitere copolymerisierbare Monomere können ohne besondere Einschränkung alle dem Fachmann bekannten radikalisch poly merisierbaren C=C-Doppelbindungs-haltigen Monomere oder Monomergemische verwendet werden. Beispielhaft genannte Monomere hierfür sind: Methylacrylat, Ethylacrylat, Propylacrylat, Methylmethacrylat, Ethylmethacrylat, Benzylacrylat, Benzylmethacrylat, sec.-Butylacrylat, tert-Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxy-ethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufuryl-acrylat, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat, 2-Butoxy-ethylacrylat, 2-Butoxyethylmethacrylat, 3-Methoxyacrylsäuremethylester, 3-Methoxybutylacrylat, Phenoxyethylacrlylat, Phenoxy-ethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4- Heptafluorobutylacrylat, 2,2,3,3,4,4,4 Heptafluorobutylmethacrylat, 2,2,3,3,4,4,5,5,6,6,7,7,8,8,8 Pentadecafluorooctylmethacrylat, Dimethylaminopropylacrylamid, Dimethylaminopropylmethacrylamid, N-(1-Methyl-undecyl)acrylamid, N-(n-Butoxymethyl)acrylamid, N-(Butoxymethyl)methacrylamid, N-(Ethoxymethyl)acrylamid, N-(n-Octadecyl) acrylamid, weiterhin N,N-Dialkyl-substituierte Amide, wie beispielsweise N,N-Dimethylacrylamid, N,N-Dimethylmethacrylamid, N-Benzylacrylamide, N-Isopropylacrylamid, N-tert-Butylacrylamid, N-tert-Octylacrylamid, N-Methylolacrylamid, N-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, Styrol, a- und p-Methylstyrol, a-Butylstyrol, 4-n-Butylstyrol, 4-n-Decylstyrol, 3,4-Dimethoxystyrol. Makromonomere wie 2-Polystyrolethylmethacrylat (Molekulargewicht MW von 4000 bis 13000 g/mol), Poly(Methylmethacrylat)ethylmethacrylat (MW von 2000 bis 8000 g/mol).

Vorzugsweise enthält das Copolymerisat des erfindungsgemäßen Primers maximal 50 Masseprozent, bevorzugt maximal 40 Masseprozent Vinylcaprolactam und/oder Vinylpyrrolidon, bezogen auf die Summe aller Monomere des Copolymerisats. Ferner enthält das Copolymerisat des erfindungsgemäßen Primers vorzugsweise mindestens 15 Masseprozent, bevorzugt mindestens 20 Masseprozent Vinylcaprolactam und/oder Vinylpyrrolidon, bezogen auf die Summe aller Monomere des Copolymerisats, wobei 30 Masseprozent Vinylcaprolactam und/oder Vinylpyrrolidon besonders bevorzugt sind.

In Bezug auf den Anteil an Acrylsäure ist ein Anteil von 20 Masseprozent, bevorzugt 10 Masseprozent, besonders bevorzugt 0 Masseprozent, bezogen auf die Summe aller Monomere des Copolymerisats, am Copolymerisat besonders vorteilhaft

Vorteilhafterweise erfolgt die Vernetzung der Monomeren zu dem Copolymerisat durch thermische Vernetzung. Der Begriff "thermische Vernetzung" bezieht sich darauf, dass die chemische Vernetzungsreaktion bzw. die Vernetzungsreaktionen durch Temperatureinwirkung einsetzt bzw. einsetzen oder initiiert wird bzw. werden und nicht durch Strahlungseinwirkung. Die Vernetzungsreaktionen in dieser Erfindung werden also vorzugsweise weder durch aktinische noch durch ionisierende Strahlung wie etwa UV-, Röntgen- noch Elektronenstrahlen initiiert. Die Temperatur, bei der die chemischen Vernetzungsreaktionen einsetzen oder initiiert werden, kann bei Raumtemperatur oder sogar darunter liegen. Die Vernetzungsreaktion startet nach dem Verdunsten des Lösemittels.

Weitere Haftklebstoffbestandteile können beispielsweise zusätzliche andere Polymere, Harze, Weichmacher, Stabilisatoren, rheologische Additive, Füllstoffe, Vernetzer, Initiatoren, Katalysatoren, Beschleuniger und dergleichen sein, wie sie dem Fachmann für Haftklebstoffe als Additive bzw. als Komponenten bekannt sind.

Vorteilhafterweise ist der erfindungsgemäße Primer frei von zusätzlichen anderen Polymeren, insbesondere von chlorierten Polyolefinen. Vorteilhaft ist ebenfalls die Abwesenheit von zusätzlichen Vernetzern. Auch die Abwesenheit von Epoxidharzen liefert besonders geeignete Primer. Der erfindungsgemäße Primer enthält vorteilhaft auch keine Weichmacher sowie keine Initiatoren, Katalysatoren oder Beschleuniger.

Unter einem chlorierten Polyolefin wird dabei ein Polyolefin verstanden, das chloriert wurde. Mit Epoxidharzen sind hier alle unvernetzten, bei Raumtemperatur festen oder flüssigen, in geeigneten Lösungsmitteln löslichen, zwei oder mehr Epoxidgruppen tragenden Oligomere gemeint.

Wie bereits oben ausgeführt, handelt es sich bei dem mindestens einen organofunktionellen Silan gemäß der vorliegenden Erfindung um Verbindungen der allgemeinen Formel (R¹O)₃Si-R²X oder (R¹O)₂(R³)Si-R²X verstanden. Typische Beispiele für den Substituenten (R¹O) sind Methoxy-, Ethoxy-, 2-Methoxyethoxy- oder Acetoxy-Gruppen. Der Substituent R³ ist typischerweise eine Methylgruppe. Typische in Frage kommende Substituenten R²X sind die Gruppen 3-Glycidoxypropyl-, vinyl-, methacryloxymethyl-, 3-methacryloxypropyl-, methyl, isooctyl, hexadecyl-, cyclohexyl- oder phenyl-, um nur einige Beispiele zu nennen.

Besonders bevorzugt sind dabei organofunktionelle Silane, die glycidoxy-funktionell sind. Hier sind insbesondere 3-Glycidoxypropyltrimethoxysilan und 3-Glycidoxypropyltriethoxysilan zu nennen, die von der Firma Wacker unter der Produktbezeichnung GENIOSIL® GF 80 bzw. GENIOSIL® GF 82 vertrieben werden.

Weiterhin bevorzugt sind solche organofunktionellen Silane, die amino-funktionell oder vinyl-funktionell sind. Als amino-funktionelle Silane sind N-Cyclohexylaminomethylmethyldiethoxysilan, N-Cyclohexylaminomethyltriethoxysilan, N-Phenylaminomethyltrimethoxysilan, N-(2-Aminoethyl)-3-amino-propyltrimethoxysilan, N-Cyclohexyl-3-aminopropyltrimethoxysilan, 3-Aminopropyltriethoxysilan, N-(2-Aminoethyl)-3-aminopropylmethyldimethoxysilan, 3-Aminopropyltrimethoxysilan und 3-Ureidopropyltrimethoxysilan zu nennen. Als vinyl-funktionelle Silane kommen beispielsweise Vinyltrimethoxysilan, Vinyldimethoxymethylsilan, Vinyltriethoxysilan, Vinyltris(2-methoxyethoxy)-silan und Vinyltriacetoxysilan zur Anwendung.

Als Lösemittel für den erfindungsgemäßen Primer sind Alkohole oder Lösemittel, die Alkohole enthalten, besonders geeignet, wobei ein einzelner Alkohol oder eine Mischung mehrerer Alkohole verwendet werden kann. Unter den Alkoholen hat sich Isopropanol als besonders vorteilhaft erwiesen.

In Bezug auf das Verhältnis von Copolymerisat zu organofunktionellem Silan ist die Konzentration des Copolymerisats der in dem einen oder in den mehreren Lösemitteln gelösten oder dispergierten Mischung vorzugsweise höher als die des einen oder der mehreren organofunktionellen Silane.

Dabei ist es besonders bevorzugt, wenn die Konzentration des Copolymerisats der in dem einem oder in den mehreren Lösemitteln gelösten oder dispergierten Mischung zwischen einschließlich 1,0 Masseprozent und einschließlich 30,0 Masseprozent, bevorzugt zwischen einschließlich 2,0 Masseprozent und einschließlich 20,0 Masseprozent, insbesondere zwischen einschließlich 3,0 Masseprozent und einschließlich 10,0 Masseprozent, jeweils bezogen auf den Primer, beträgt. Organofunktionelle Silane sind vorteilhafterweise in einer Konzentration von zwischen einschließlich 0,1 Masseprozent und einschließlich 5 Masseprozent, bevorzugt zwischen einschließlich 0,5 und 2,0, enthalten.

In einer weiteren vorteilhaften Ausführungsform des erfindungsgemäßen Primers enthält der Primer zusätzlich einen oder mehrere bekannte fluoreszierende optische Aufheller. Die Funktion des fluoreszierenden optischen Aufhellers ist die Kenntlichmachung eines geprimerten Untergrundes. Ohne optische Kenntlichmachung ist es häufig schwer, einen geprimerten Untergrund von einem nicht geprimerten Untergrund zu unterscheiden, da die Auftragsstärke eines Primers in der Regel sehr dünn und somit optisch kaum sichtbar ist. Ein bekannter fluoreszierender optischer Aufheller ist 2,5-Thiophendiylbis(5-tert-butyl-1,3-benzoxazol), CAS-Nr. 7128-64-5, kommerziell erhältlich unter dem Handelsnamen Tinopal OB®.

### Produkteigenschaften

Primer gemäß obiger Zusammensetzung haben eine exzellente Haftung auf insbesondere Glas, aber auch auf vielen anderen hydrophilen Oberflächen wie zum Beispiel Keramik. Klebebänder mit polaren Haftklebstoffen, insbesondere Haftklebstoffen auf Basis von Copolymerisaten aus Acrylsäureestern und Acrylsäure haften ausgezeichnet auf dem Primer. Die exzellente Haftung zeigt sich darin, dass das Klebeband dann überwiegend nur noch unter Zerstörung, das heißt unter innerer Klebebandspaltung ablösbar ist. Nach mehrwöchigen Feuchtwärmelagerungen oder Klimawechsellagerungen unter Einbeziehung von Temperaturen von 60 ° bis 90 °C bei gleichzeitiger relativer Luftfeuchtigkeit von größer oder gleich 80 % des auf den mit dem Primer beschichteten Untergrund aufgeklebten Klebebandes lässt sich das Klebeband überwiegend nur unter eigener Zerstörung ablösen.

Überraschenderweise wurde im Rahmen der vorliegenden Erfindung gefunden, dass die haftvermittelnde Wirkung des Primers auch dann nicht - oder jedenfalls nicht messbar - beeinträchtigt wird, wenn dem Primer Füllstoffe beigefügt werden. Ein Füllstoffanteil, der der mehrfachen Konzentration der Silan-Konzentration entspricht, ist bei einigen Füllstoffen problemlos möglich, ohne dass es zu einer Beeinträchtigung der haftvermittelnden Wirkung kommt. In dieser Hinsicht besonders geeignete Füllstoffe sind Farbpigmente oder auch Mineralfüllstoffe.

Auf diese Weise ist es möglich, Primer mit bestimmten Funktionalitäten auszustatten, wenn nämlich funktionale Füllstoffe verwendet werden. So kann der Primer eingefärbt werden, wenn Farbpigmente wie zum Beispiel Ruß oder Titandioxid zugesetzt werden. Angesichts der möglichen hohen Füllstoffkonzentration ist es möglich, dass der Primer eine vollständige Blickdichtigkeit erreicht, d.h. dass eine Transmission von 0% im UV/VIS-Spektrum erreicht werden kann.

Der Primer kann ferner elektrisch oder thermisch leitfähig gemacht werden, wenn z.B. Metallpartikel zugesetzt werden. Auch kann der Primer durch die Wahl des Füllstoffs in seinem pH-Wert eingestellt werden, wodurch zum Beispiel durch Verwendung von Calciumoxid eine antibakterielle Wirkung erzeugt werden kann. Auch rheologisch wirksame Füllstoffe, wie zum Beispiel pyrogene Kieselsäuren können verwendet werden, so dass zum Beispiel auch relativ dicke, formstabile Primerschichten erzeugt werden können. Weiterhin ist es möglich, durch einen hohen Anteil an preisgünstigen Mineralfüllstoffen, wie zum Beispiel Kreide, die Kosten für den Primer zu senken, ohne dass die Leistungsfähigkeit messbar beeinträchtigt wird.

Dies eröffnet ein großes Spektrum an neuen Einsatzmöglichkeiten für Primer. So können Eigenschaften, die bislang durch den Klebstoff verwirklicht werden mussten, wie eine Einfärbung, jetzt durch den Primer abgedeckt werden, was wiederum den Vorteil mit sich bringt, dass geringere Ansprüche an das Klebstoffsystem zu stellen sind.

Die Herstellung einer haftvermittelnden Schicht mit dem erfindungsgemäßen Primer erfolgt in bekannter Weise, indem nämlich auf einem Substrat zunächst der Primer aufgebracht wird. Im Anschluss lässt man das oder die Lösemittel verdunsten, woraufhin das Klebeband appliziert werden kann. Zwischen Aufbringen/Verdunsten des Lösemittels und der Applikation des Klebebandes können nur wenige Minuten, aber auch viele Tage oder Wochen liegen.

Anhand der folgenden Beispiele soll die Erfindung näher beschrieben werden, ohne die Erfindung damit einschränken zu wollen.

Die folgenden Prüfmethoden wurden eingesetzt, um die erfindungsgemäß hergestellten Muster kurz zu charakterisieren:
Dynamisch Mechanische Analyse (DMA) zur Bestimmung des Speichermoduls G' und des Verlustmoduls G"

Zur Charakterisierung der Haftklebrigkeit der im Primer enthaltenen Copolymerisate erfolgten Bestimmungen des Speichermoduls G' und des Verlustmoduls G" mittels Dynamisch Mechanischer Analyse (DMA).
Die Messungen erfolgten mit dem schubspannungsgesteuerten Rheometer DSR 200 N der Firma Rheometric Scientific im Oszillationsversuch bei einer sinusförmig oszillierenden Scherbeanspruchung in einer Platte-Platte-Anordnung. Der Speichermodul G' und der Verlustmodul G" wurden im Frequenzsweep von 10⁻¹ bis 10² rad/sec bei einer Temperatur von 23 °C bestimmt. G' und G" sind folgendermaßen definiert:
G' = τ/γ •cos(δ) (τ = Schubspannung, γ = Deformation, δ = Phasenwinkel = Phasenverschiebung zwischen Schubspannungs- und Deformationsvektor).
G" = τ/γ •sin(δ) (τ = Schubspannung, γ = Deformation, δ = Phasenwinkel = Phasenverschiebung zwischen Schubspannungs- und Deformationsvektor).
Die Definition der Winkelfrequenz lautet: ω = 2π • f (f = Frequenz). Die Einheit ist rad/sec.

Die Dicke der gemessenen haftklebrigen Copolymerisat-Proben betrug stets zwischen 0,9 und 1,1 mm (1 +/- 0,1 mm). Die Haftklebrigen Copolymerisat-Proben wurden hergestellt, indem die weiter unten beschriebenen Copolymerisate auf einer beidseitig silikonisierten Polyesterfolie (Trennliner) ausgestrichen wurden, das Lösungsmittel bei 70° C abgedampft wurde und die so erhaltenen 100 µm dicken Ausstriche so oft aufeinandergelegt wurden, bis eine Dicke von ca. 1 mm erreicht war. Der Probendurchmesser betrug jeweils 25 mm. Die Vorspannung erfolgte mit einer Belastung von 3N. Der Stress der Probenkörper betrug bei allen Messungen 2500 Pa.

### Klebkraft

Die Klebkraft wurde in Anlehnung an PSTC-101 bei Raumtemperatur bestimmt. Nach dieser Methode wurde zunächst der Primer auf das Substrat (den Untergrund) dünn aufgetragen. Dies erfolgte mit einem Pinselaufstrich des Primers auf das Substrat. Nach dem Abdunsten des Lösemittels wurde der zu messende Klebstreifen (das Klebeband) auf den nunmehr mit dem Primer in einer Schichtdicke von ungefähr 3 µm bis 5 µm versehenen Untergrund aufgebracht (aufgeklebt). Dazu wurde ein Streifen des Klebebandes in definierter Breite (Standard: 20 mm) auf den mit dem Primer beschichteten Untergrund mit den Abmessungen 50 mm × 125 mm × 1,1 mm durch zehnmaliges Überrollen mittels einer 5 kg Stahlrolle geklebt.
Die Zeit zwischen dem letzten Überrollen des Klebebandes und dem Abziehen betrug: a) 1 Stunde, b) 3 Tage. Der Abzugswinkel betrug jeweils 90°, die Abzugsgeschwindigkeit 300 mm/min. Die zum Abziehen erforderliche Kraft ist die Klebkraft, welche in der Einheit N/cm angegeben wird und sich somit auf eine normierte Klebebandbreite von 1 cm bezieht. Ermittelt wurde neben der Klebkraft die Art des Versagens der Klebverbindung. Die gemessenen Klebstreifen waren mit einer 23 µm dicken, mit Trichloressigsäure angeätzten Polyesterfolie rückseitenverstärkt. Alle Messungen wurden in einem klimatisierten Raum bei 23 °C und 50 % relativer Luftfeuchte durchgeführt.

### Klimalagerungen

Die Verbunde aus dem mit dem erfindungsgemäßen Primer beschichteten Substrat und dem darauf aufgeklebten Klebeband wurden Lagerungen bei ausgewählten klimatischen Bedingungen unterworfen, um die klimatische Belastbarkeit der Verklebung zu ermitteln.
Lagerung a): zweiwöchige Lagerung in einem Klima von 85 °C und 85% relative Luftfeuchtigkeit
Lagerung b): zweiwöchige Klimawechsellagerung mit den Zyklen 4 Stunden -40 °C, 4 Stunden Aufheizen / Abkühlen, 4 Stunden 80°C/80% relative Luftfeuchtigkeit.
   Nach Ablauf der Lagerzeit wurden die mit einer 23 µm dicken, mit Trichloressigsäure angeätzten Polyesterfolie rückseitenverstärkten Proben der Klebkraftprüfung bei einem Abzugswinkel von jeweils 90° und einer Abzugsgeschwindigkeit von 300 mm/min in einem klimatisierten Raum bei 23 °C und 50 % relativer Luftfeuchte unterzogen.

### Statische Glasübergangstemperatur

Die Bestimmung der statischen Glasübergangstemperatur erfolgt über Dynamische Differenzkalorimetrie nach DIN 53765. Die Angaben zur Glasübergangstemperatur T_{g} beziehen sich auf den Glasumwandlungstemperatur-Wert T_{g} nach DIN 53765:1994-03, sofern im Einzelfall nichts anderes angegeben ist. Aufheizkurven laufen mit einer Heizrate von 10 K/min. Die Muster werden in Al-Tiegeln mit gelochtem Deckel und Stickstoffatmosphäre vermessen. Es wird die zweite Aufheizkurve ausgewertet. Eine Glasübergangstemperatur ist als Wendepunkt im Thermogramm erkennbar.

### Molekulargewichte

Die Bestimmung des mittleren Molekulargewichtes M_{W} beziehungsweise des mittleren Molekulargewichtes M_{N} und der Polydispersität D erfolgte mittels Gelpermeationschromatographie (GPC). Als Eluent wurde THF mit 0,1 Vol.-% Trifluoressigsäure eingesetzt. Die Messung erfolgte bei 25 °C. Als Vorsäule wurde PSS-SDV, 5 µm, 103 Å (10-7 m), ID 8,0 mm x 50 mm verwendet. Zur Auftrennung wurden die Säulen PSS-SDV, 5 µm, 103 Å (10-7 m), 105 Å (10-5 m) und 106 Å (10-4 m) mit jeweils ID 8,0 mm × 300 mm eingesetzt. Die Probenkonzentration betrug 4 g/l, die Durchflussmenge 1,0 ml pro Minute. Es wurde gegen PMMA-Standards gemessen.

### Feststoffgehalt

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

### K-Wert (nach FIKENTSCHER)

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskositmeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.)

Folgende Substrate (Untergründe, auf die zunächst der Primer aufgetragen und darauf anschließend das Klebeband aufgeklebt wurde) wurden verwendet:
a) Glasprüfkörper (Firma Rocholl GmbH)
b) Keramikkachel (Baumarkt)

Die Klebebänder (Testklebebänder), mit denen der Primer geprüft wurde, basierten auf Polyacrylat-Haftklebstoffen. Zur Herstellung dieser Polyacrylat-Haftklebstoffe wurden die folgenden Rohstoffe verwendet:

| Chemische Verbindung | Handelsname | Hersteller oder Lieferant | CAS-Nr. |
|---|---|---|---|
| Bis-(4-tert-butylcyclohexyl)peroxydicarbonat | Perkadox 16 | Akzo Nobel | 15520-11-3 |
| 2,2'-Azobis(2-methylpropionitril), AIBN | Vazo 64 | DuPont | 78-67-1 |
| 2,2'-Azobis(2-methylbutyronitrile) | Vazo 67 | DuPont | 13472-08-7 |
| Pentaerythrittetraglycidether | Polypox R16 | UPPC AG | 3126-63-4 |
| 3,4-Epoxycyclohexylmethyl-3,4-epoxycyclohexancarboxylat | Uvacure 1500 | Cytec Industries Inc. | 2386-87-0 |
| Triethylentetramin | Epikure 925 | Hexion Speciality Chemicals | 112-24-3 |
| Mikroballons (MB) (trocken-unexpandierte Mikrosphären, Durchmesser 9 bis 15 µm, Expansions-Starttemperatur 106 bis 111 °C, TMA-Dichte ≤ 25 kg/m³) | Expancel 051 DU 40 | Expancel Nobel Industries | |
| Terpenphenolharz (Erweichungspunkt 110 °C; M_{w} = 500 bis 800 g/mol; D = 1,50) | Dertophene T110 | DRT resins | 25359-84-6 |
| Acrylsäure-n-Butylester | n-Butylacrylat | Rohm & Haas | 141-32-2 |
| Acrylsäure | Acrylsäure rein | BASF | 79-10-7 |
| 2-Ethylhexylacrylat | | Brenntag | 103-11-7 |
| Methylacrylat | | BASF | 96-33-3 |

Die Expansionsfähigkeit der Mikroballons kann durch die Bestimmung der TMA-Dichte [kg/m³] beschrieben werden (Stare Thermal Analysis System der Firma Mettler Toledo; Heizrate 20 °C/min). Die TMA-Dichte ist hierbei die minimal erreichbare Dichte bei einer bestimmten Temperatur Tₘₐₓ unter Normaldruck, bevor die Mikroballons kollabieren.

Die Bestimmung des Erweichungspunktes der Harze erfolgt nach DIN ISO 4625.

Weiterhin wurden die folgenden Lösemittel zur Herstellung der in den Testklebebändern enthaltenen Polyacrylat-Haftklebstoffe verwendet:

| Bezeichnung | CAS-Nr. | Hersteller |
|---|---|---|
| Spezialbenzin 60/95 oder Naphtha (Erdöl) mit Wasserstoff behandelte leichte | 64742-49-0 | Shell, Exxon |
| Aceton | 67-64-1 | Shell |
| Isopropanol | 67-63-0 | Shell |

### Testklebeband 1

Ein beispielhafter Polyacrylat-Haftklebstoff 1 zur Herstellung des Testklebebandes 1 wurde wie folgt hergestellt: Ein für radikalische Polymerisationen konventioneller Reaktor wurde mit 54,4 kg 2-Ethylhexylacrylat, 20,0 kg Methylacrylat, 5,6 kg Acrylsäure und 53,3 kg Aceton/Isopropanol (94:6) befüllt. Nach 45minütiger Durchleitung von Stickstoffgas unter Rühren wurde der Reaktor auf 58 °C hochgeheizt und 40 g Vazo 67, gelöst in 400 g Aceton, hinzugegeben. Anschließend wurde das äußere Heizbad auf 75 °C erwärmt und die Reaktion konstant bei dieser Außentemperatur durchgeführt. Nach 1 h wurden erneut 40 g Vazo 67, gelöst in 400 g Aceton, zugegeben und nach 4 h wurde mit 10 kg Aceton/Isopropanol-Gemisch (94:6) verdünnt.
Nach 5h sowie nach 7 h wurde jeweils mit 120 g Bis-(4-tert-butylcyclohexyl)-peroxydicarbonat, jeweils gelöst in 400 g Aceton, nachinitiiert. Nach 22 h Reaktionszeit wurde die Polymerisation abgebrochen und auf Raumtemperatur abgekühlt. Das Produkt hatte einen Feststoffgehalt von 55,9 % und wurde in einem Aufkonzentrationsextruder bei Unterdruck vom Lösemittel befreit (Restlösemittelgehalt ≤ 0,3 Masseprozent). Das resultierende Polyacrylat hatte einen K-Wert von 58,8, ein mittleres Molekulargewicht von Mw = 746.000 g/mol, eine Polydispersität von D (Mw/Mn) = 8,9 und eine statische Glasübergangstemperatur von T_{g} = - 35,6 °C.
Dieses Basispolymer wurde in einem Fütterextruder (Einschneckenförderextruder der Firma TROESTER GmbH & Co KG, Deutschland) aufgeschmolzen und mit diesem als Polymerschmelze über einen beheizbaren Schlauch in einen Planetwalzenextruder der Firma Entex (Bochum) gefördert. Über eine Dosieröffnung wurde nun das geschmolzene Harz Dertophene T 110 zugegeben, so dass eine Konzentration des Harzes in der Schmelze von 28,3 Masseprozent entstand. Weiterhin wurde der Vernetzer Polypox R16 hinzugefügt. Seine Konzentration in der Schmelze betrug 0,14 Masseprozent. Alle Komponenten wurden zu einer homogenen Polymerschmelze gemischt.

Mittels einer Schmelzepumpe und eines beheizbaren Schlauches wurde die Polymerschmelze in einen Doppelschneckenextruder (Firma Berstorff) überführt. Dort wurde der Beschleuniger Epikure 925 hinzugefügt. Seine Konzentration in der Schmelze betrug 0,14 Masseprozent. Anschließend wurde die gesamte Polymermischung in einem Vakuumdom bei einem Druck von 175 mbar von allen Gaseinschlüssen befreit. Im Anschluss an die Vakuumzone wurden die Mikroballons zudosiert und mittels eines Mischelements homogen in die Polymermischung eingearbeitet. Ihre Konzentration in der Schmelze betrug 0,7 Masseprozent. Die entstandene Schmelzmischung wurde in eine Düse überführt. Nach Verlassen der Düse, also nach Druckabfall, expandierten die eingearbeiteten Mikroballons, wobei durch den Druckabfall eine scherungsfreie Abkühlung der Polymermasse erfolgte. Es entstand ein geschäumter Polyacrylat-Haftklebstoff, welcher anschließend mittels eines Walzenkalanders bahnförmig in einer Dicke von 0,8 mm ausgeformt und mit einer beidseitig silikonisierte Trennfolie (50 µm Polyester) eingedeckt wurde, währenddessen die chemische Vernetzungsreaktion voran schritt. Der aufgewickelte Film wurde vier Wochen bei Raumtemperatur gelagert, bevor er weiter für die Primerprüfung verwendet wurde. Der aufgewickelte Film ist das Testklebeband 1.

### Testklebeband 2

Ein beispielhafter Polyacrylat-Haftklebstoff 2A zur Herstellung der mittleren Schicht des dreischichtigen Testklebebandes 2 wurde wie folgt hergestellt:
Ein für radikalische Polymerisationen konventioneller Reaktor wurde mit 30,0 kg 2-Ethylhexylacrylat, 67,0 kg Butylacrylat, 3,0 kg Acrylsäure und 66,7 kg Aceton/ Isopropanol (96:4) befüllt. Nach 45minütiger Durchleitung von Stickstoffgas unter Rühren wurde der Reaktor auf 58 °C hochgeheizt und 50 g Vazo 67, gelöst in 500 g Aceton, hinzugegeben. Anschließend wurde das äußere Heizbad auf 70 °C erwärmt und die Reaktion konstant bei dieser Außentemperatur durchgeführt. Nach 1 h wurden erneut 50 g Vazo 67, gelöst in 500 g Aceton, zugegeben und nach 2 h mit 10 kg Aceton/Isopropanol-Gemisch (96:4) verdünnt. Nach 5,5 h wurden 150 g Bis-(4-tert-butylcyclohexyl)peroxydicarbonat, gelöst in 500 g Aceton, zugegeben; nach 6 h 30 min wurde erneut mit 10 kg Aceton/Isopropanol-Gemisch (96:4) verdünnt. Nach 7 h wurden weitere 150 g Bis-(4-tert-butylcyclohexyl)peroxydicarbonat, gelöst in 500 g Aceton, zugegeben und das Heizbad auf eine Temperatur von 60 °C eingeregelt.
Nach 22 h Reaktionszeit wurde die Polymerisation abgebrochen und auf Raumtemperatur abgekühlt. Das Produkt hatte einen Feststoffgehalt von 50,2 % und wurde getrocknet. Das resultierende Polyacrylat hatte einen K-Wert von 75,2, ein mittleres Molekulargewicht von Mw = 1 370 000 g/mol, eine Polydispersität von D (Mw/Mn) = 17,13 und eine statische Glasübergangstemperatur von Tg = - 38.0 °C.
Dieses Basispolymer wurde in einem Fütterextruder (Einschneckenförderextruder der Firma TROESTER GmbH & Co KG, Deutschland) aufgeschmolzen und mit diesem als Polymerschmelze über einen beheizbaren Schlauch in einen Planetwalzenextruder der Firma Entex (Bochum) gefördert. Über eine Dosieröffnung wurde nun der Vernetzer Polypox R16 hinzugefügt. Seine Konzentration in der Schmelze betrug 0,22 Masseprozent. Alle Komponenten wurden zu einer homogenen Polymerschmelze gemischt.
Mittels einer Schmelzepumpe und eines beheizbaren Schlauches wurde die Polymerschmelze in einen Doppelschneckenextruder (Firma Berstorff) überführt. Dort wurde der Beschleuniger Epikure 925 hinzugefügt. Seine Konzentration in der Schmelze betrug 0,14 Masseprozent. Anschließend wurde die gesamte Polymermischung in einem Vakuumdom bei einem Druck von 175 mbar von allen Gaseinschlüssen befreit. Im Anschluss an die Vakuumzone wurden die Mikroballons zudosiert und mittels eines Mischelements homogen in die Polymermischung eingearbeitet. Ihre Konzentration in der Schmelze betrug 2,0 Masseprozent. Die entstandene Schmelzmischung wurde in eine Düse überführt.
Nach Verlassen der Düse, also nach Druckabfall, expandierten die eingearbeiteten Mikroballons, wobei durch den Druckabfall eine scherungsfreie Abkühlung der Polymermasse erfolgte. Es entstand der geschäumte Polyacrylat-Haftklebstoff 2A, welcher anschließend mittels eines Walzenkalanders bahnförmig in einer Dicke von 0,8 mm ausgeformt und mit einer beidseitig silikonisierte Trennfolie (50 µm Polyester) eingedeckt wurde, währenddessen die chemische Vernetzungsreaktion voran schritt. Der aufgewickelte Film wurde vor der Weiterverarbeitung (siehe unten) einen Tag bei Raumtemperatur gelagert.

Ein beispielhafter Polyacrylat-Haftklebstoff 2B zur Herstellung der beiden äußeren Schichten des dreischichtigen Testklebebandes 2 wurde wie folgt hergestellt:
Ein für radikalische Polymerisationen konventioneller 100 L-Glasreaktor wurde mit 4,8 kg Acrylsäure, 11,6 kg Butylacrylat, 23,6 kg 2-Ethylhexylacrylat und 26,7 kg Aceton/ Spezielbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Anschließend wurde das Polyacrylat mit 0,2 Masseprozent des Vernetzers Uvacure® 1500 abgemischt, auf einen Feststoffgehalt von 30 % mit Aceton verdünnt und dann aus Lösung auf eine beidseitig silikonisierte Trennfolie (50 µm Polyester) beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C). Die Dicke betrug 50 µm. Der aufgewickelte Film wurde zwei Tage bei Raumtemperatur gelagert, bevor er weiter für die Herstellung des Testklebebandes 2 verwendet wurde.

Auf den geschäumten Film des Polyacrylat-Haftklebstoffs 2A wurde beidseitig ein Film des Polyacrylat-Haftklebstoffs 2B kaschiert. Unmittelbar vor dem Zukaschieren des Films des Polyacrylat-Haftklebstoffs 2B zu dem geschäumten Film des Polyacrylat-Haftklebstoffs 2A wurde die jeweils zu kaschierende Oberfläche des Films des Polyacrylat-Haftklebstoffs 2A bei einer Corona-Dosis von 35 Wmin/m² luftcorona-vorbehandelt. Vor der zweiten Kaschierung wurde die beidseitig silikonisierte Trennfolie des geschäumten Polyacrylat-Haftklebstoffs 2A ausgedeckt. Nach der zweiten Kaschierung wurde auch eine der beidseitig silikonisierten Trennfolien der beiden geschäumten Polyacrylat-Haftklebstoffe 2B ausgedeckt. Der dreischichtige Verbund aus Polyacrylat-Haftklebstoff 2B / Polyacrylat-Haftklebstoff 2A / Polyacrylat-Haftklebstoff 2B wurde aufgewickelt und vier Wochen bei Raumtemperatur gelagert, bevor er weiter für die Primerprüfung verwendet wurde. Der aufgewickelte Verbund ist das Testklebeband 2.

Die beispielhaft in ihrer Zusammensetzung und Herstellmethodik beschriebenen Polyacrylat-Haftklebstoffe sind in DE 10 2010 062 669 ausführlich beschrieben. Der Offenbarungsgehalt dieser Schrift sei explizit in den Offenbarungsgehalt dieser Erfindung eingebunden.

Zur Herstellung des erfindungsgemäß im Primer enthaltenenen Polyacrylathaftklebstoffs wurden die folgenden Rohstoffe verwendet:

| Chemische Verbindung | Handelsname | Hersteller | CAS-Nr. |
|---|---|---|---|
| N-Vinylcaprolactam | | Sigma-Aldrich | 2235-00-9 |
| N-Vinyl-2-pyrrolidon | | Sigma-Aldrich | 88-12-0 |
| Acrylsäure-n-Butylester | n-Butylacrylat | Rohm & Haas | 141-32-2 |
| 2-Ethylhexylacrylat | | Brenntag | 103-11-7 |
| Bis-(4-tert-butylcyclohexyl)peroxydicarbonat | Perkadox 16 | Akzo Nobel | 15520-11-3 |
| 2,2'-Azobis(2-methylpropionitril), AIBN | Vazo 64 | DuPont | 78-67-1 |

Weiterhin wurden die folgenden Lösemittel zur Herstellung des erfindungsgemäß im Primer enthaltenen Polyacrylathaftklebstoffs verwendet:

| Bezeichnung | CAS-Nr. | Hersteller |
|---|---|---|
| Spezialbenzin 60/95 oder Naphtha (Erdöl) mit Wasserstoff behandelte leichte | 64742-49-0 | Shell, Exxon |
| Aceton | 67-64-1 | Shell |

Beispielhafte Polyacrylat-Haftklebstoffe zur Verwendung als Bestandteil im erfindungsgemäßen Primer wurden wie folgt hergestellt:

### Primer-Haftklebstoff 1

Ein für radikalische Polymerisationen konventioneller 100 L-Glasreaktor wurde mit 12,0 kg N-Vinylcaprolactam, 28,0 kg Butylacrylat und 26,7 kg Aceton/ Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat wurde auf einen Feststoffgehalt von 34,9 Masseprozent mit Aceton verdünnt. Die so erhaltene Lösung ist der Primer-Haftklebstoff 1.

### Primer-Haftklebstoff 2 für ein Vergleichsbeispiel

Ein für radikalische Polymerisationen konventioneller 100 L-Glasreaktor wurde mit 8,0 kg N-Vinylcaprolactam, 32,0 kg 2-Ethylhexylacrylat und 26,7 kg Aceton/ Spezialbenzin 60/95 (1:1) befüllt Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat wurde auf einen Feststoffgehalt von 34,9 Masseprozent mit Aceton verdünnt. Die so erhaltene Lösung ist der Primer-Haftklebstoff 2.

### Primer-Haftklebstoff 3

Ein für radikalische Polymerisationen konventioneller 100 L-Glasreaktor wurde mit 8,0 kg N-Vinyl-2-pyrrolidon, 32 kg Butylacrylat, und 26,7 kg Aceton/ Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat wurde auf einen Feststoffgehalt von 34,9 Masseprozent mit Aceton verdünnt. Die so erhaltene Lösung ist der Primer-Haftklebstoff 3.

### Primer-Haftklebstoff 4 für ein Vergleichsbeispiel

Ein für radikalische Polymerisationen konventioneller 100 L-Glasreaktor wurde mit 154,6 kg Butylacrylat, 24,4 kg 2-Ethylhexylacrylat und 26,7 kg Aceton/ Spezialbenzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser
Außentemperatur durchgeführt. Nach 1 h Reaktionszeit wurden wiederum 30 g AIBN hinzugegeben. Nach 4 und 8 h wurde mit jeweils 10,0 kg Aceton/Spezialbenzin 60/95 (1:1) Gemisch verdünnt. Zur Reduktion der Restinitiatoren wurden nach 8h und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat wurde auf einen Feststoffgehalt von 34,9 Masseprozent mit Aceton verdünnt. Die so erhaltene Lösung ist der Primer-Haftklebstoff 4.

Die Primer-Haftklbstoffe 1 bis 4 wurden kurz per DMA-Messungen charakterisiert. Die G'- und G"-Kurven der Primer-Haftklebstoffe 1 bis 4 lagen im Deformationsfrequenzbereich von 10⁰ bis 10¹ rad/sec bei 23 °C stets zumindest zum Teil im Bereich von 10³ bis 10⁷ Pa.

Zur Herstellung der erfindungsgemäßen Primer wurden die hinsichtlich ihrer Herstellung und Zusammensetzung oben beschriebenen Primer-Haftklebstoffe sowie die folgenden Rohstoffe verwendet:

| Chemische Verbindung/ Beschreibung (Herstellerangaben) | Handelsname | Hersteller oder Lieferant | CAS-Nr. |
|---|---|---|---|
| 3-Glydicoxypropyltrimehtoxysilan | Geniosil® GF 80 | Wacker Chemie | 2530-83-8 |
| 3-Aminopropyltriethoxysilan | Geniosil® GF 93 | Wacker Chemie | 919-30-2 |
| Vinyltrimethoxysilan | Geniosil® XL 10 | Wacker Chemie | 2768-02-7 |

Weiterhin wurden zusätzlich zu den in den Primer-Haftklebstoffen enthaltenen Lösemitteln das folgende Lösemittel zur Herstellung der erfindungsgemäßen Primer verwendet:

| Bezeichnung | CAS-Nr. | Hersteller oder Lieferant |
|---|---|---|
| Isopropanol | 67-63-0 | Shell |

Die folgenden funktionalen Füllstoffe wurden beispielhaft in die Primer eingearbeitet:

| Chemische Verbindung/ Beschreibung (Herstellerangaben) | Handelsname | Hersteller oder Lieferant | CAS-Nr. |
|---|---|---|---|
| Furnace-Ruß | Printex® 60 | Evonik | 1333-86-4 |
| Titandioxid | Kronos® 2160 | Kronos International | 13463-67-7 |
| Calciumoxid | Weißfeinkalk | RWK | 1305-78-8 |
| Aluminiumpulver | STANDART Aluminiumpulver Lack NOT® | Eckart | 7429-90-5 |
| Gemahlene Kreide | Omyacarb 4 BG ® | Omya | 471-34-1 |
| Hydrophobierte pyrogene Kieselsäure | Aerosil R202® | Evonik | 7631-86-9 |

Weiterhin wurde noch der folgende fluoreszierende optische Aufheller verwendet:

| | | | |
|---|---|---|---|
| Chemische Verbindung/ Beschreibung (Herstellerangaben) | Handelsname | Hersteller oder Lieferant | CAS-Nr. |
| 2,5-Thiophendiylbis(5-tert-butyl-1,3-benzoxazol) | Tinopal OB ® | BASF | 7128-64-5 |

### Beispiele

### Beispiel 1

Zusammensetzung des Primers:

| Rohstoff / Komponente | Masseprozent |
|---|---|
| Primer-Haftklebstoff 1 (34,9 Gewichtsprozent Feststoffanteil) | 10,5 |
| GENIOSIL® GF80 | 1,0 |
| Isopropanol | 88,5 |

Der Primer wurde in folgender Weise mit den Testklebebändern geprüft, wobei die folgenden Ergebnisse erhalten wurden:

| Testklebeband | Substrat | Klebkraft (300mm/min) (N/cm) | | Klebkraft nach Klimalagerung (300 mm/min) (N/cm) | |
|---|---|---|---|---|---|
| | | nach 1 Stunde | nach 3 d | a) 2 Wo 85°C/ 85% rel. Feuchte | b) 2 Wo Klimawechsel |
| 1 | Glas | 49 (80%K) | 62 (K) | 62 (K) | 59 (K) |
| 1 | Keramikkachel | 46 (70%K) | 60 (K) | 59 (K) | 55 (K) |
| 2 | Glas | 51 (80%K) | 70 (K) | 60 (K) | 63 (K) |
| 2 | Keramikkachel | 48 (70%K) | 71 (K) | 66 (K) | 60 (K) |

| | | | | | |
|---|---|---|---|---|---|
| K = Kohäsive Spaltung des Klebebandes (Die Prozentangabe bezieht sich auf den kohäsiven Anteil. Der nicht kohäsive Anteil ist der adhäsive Anteil.) | | | | | |

### Beispiel 2

Zusammensetzung des Primers:

| Rohstoff / Komponente | Masseprozent |
|---|---|
| Primer-Haftklebstoff 1 (34,9 Gewichtsprozent Feststoffanteil) | 10,5 |
| GENIOSIL® GF93 | 1,0 |
| Isopropanol | 88,5 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (300 mm/min) (N/cm) | |
|---|---|---|---|---|---|
| | | nach 1 Stunde | nach 3 d | a) 2 Wo 85°C/ 85% rel. Feuchte | b) 2 Wo Klimawechsel |
| 1 | Glas | 44 (70%K) | 59 (K) | 64 (K) | 65 (K) |
| 1 | Keramikkachel | 39 (70%K) | 59 (K) | 59 (K) | 52 (K) |
| 2 | Glas | 31 (60%K) | 62 (K) | 61 (K) | 60 (K) |
| 2 | Keramikkachel | 28 (50%K) | 69 (K) | 59 (K) | 66 (K) |

| | | | | | |
|---|---|---|---|---|---|
| K = Kohäsive Spaltung des Klebebandes (Die Prozentangabe bezieht sich auf den kohäsiven Anteil. Der nicht kohäsive Anteil ist der adhäsive Anteil.) | | | | | |

### Beispiel 3

Zusammensetzung des Primers:

| Rohstoff / Komponente | Masseprozent |
|---|---|
| Primer-Haftklebstoff 1 (34,9 Gewichtsprozent Feststoffanteil) | 10,5 |
| GENIOSIL® XL10 | 1,0 |
| Isopropanol | 88,5 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (300 mm/min) (N/cm) | |
|---|---|---|---|---|---|
| | | nach 1 Stunde | nach 3 d | a) 2 Wo 85°C/ 85% rel. Feuchte | b) 2 Wo Klimawechsel |
| 1 | Glas | 56 (90%K) | 56 (K) | 62 (K) | 70 (K) |
| 1 | Keramikkachel | 49 (90%K) | 52 (K) | 67 (K) | 63 (K) |
| 2 | Glas | 51 (80%K) | 56 (K) | 62 (K) | 65 (K) |
| 2 | Keramikkachel | 53 (70%K) | 55 (K) | 69 (K) | 69 (K) |

| | | | | | |
|---|---|---|---|---|---|
| K = Kohäsive Spaltung des Klebebandes (Die Prozentangabe bezieht sich auf den kohäsiven Anteil. Der nicht kohäsive Anteil ist der adhäsive Anteil.) | | | | | |

### Beispiel 4 (Vergleichsbeispiel)

Zusammensetzung des Primers:

| Rohstoff / Komponente | Masseprozent |
|---|---|
| Primer-Haftklebstoff 2 (34,9 Gewichtsprozent Feststoffanteil) | 10,5 |
| GENIOSIL® GF 80 | 1,0 |
| Isopropanol | 88,5 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (300 mm/min) (N/cm) | |
|---|---|---|---|---|---|
| | | nach 1 Stunde | nach 3 d | a) 2 Wo 85°C/ 85% rel. Feuchte | b) 2 Wo Klimawechsel |
| 1 | Glas | 36 (50%K) | 57 (K) | 64 (K) | 62 (K) |
| 1 | Keramikkachel | 39 (40%K) | 54 (K) | 64 (K) | 63 (K) |
| 2 | Glas | 41 (60%K) | 56 (K) | 63 (K) | 61 (K) |
| 2 | Keramikkachel | 43 (60%K) | 51 (K) | 60 (K) | 59 (K) |

| | | | | | |
|---|---|---|---|---|---|
| K = Kohäsive Spaltung des Klebebandes (Die Prozentangabe bezieht sich auf den kohäsiven Anteil. Der nicht kohäsive Anteil ist der adhäsive Anteil) | | | | | |

### Beispiel 5

Zusammensetzung des Primers:

| Rohstoff / Komponente | Masseprozent |
|---|---|
| Primer-Haftklebstoff 3 (34,9 Gewichtsprozent Feststoffanteil) | 10,5 |
| GENIOSIL® GF 80 | 1,0 |
| Isopropanol | 88,5 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (300 mm/min) (N/cm) | |
|---|---|---|---|---|---|
| | | nach 1 Stunde | nach 3 d | a) 2 Wo 85°C/ 85% rel. Feuchte | b) 2 Wo Klimawechsel |
| 1 | Glas | 47 (70%K) | 55 (K) | 63 (K) | 62 (K) |
| 1 | Keramikkachel | 44 (60%K) | 56 (K) | 69 (K) | 64 (K) |
| 2 | Glas | 40 (60%K) | 60 (K) | 60 (K) | 67 (K) |
| 2 | Keramikkachel | 33 (40%K) | 61 (K) | 66 (K) | 66 (K) |

| | | | | | |
|---|---|---|---|---|---|
| K = Kohäsive Spaltung des Klebebandes (Die Prozentangabe bezieht sich auf den kohäsiven Anteil. Der nicht kohäsive Anteil ist der adhäsive Anteil) | | | | | |

Zur Einarbeitung der genannten Füllstoffe wurde in einigen Fällen eine konzentriertere Primerlösung angesetzt, wobei das Verhältnis von Primer-Haftklebstoff zu Silan stets konstant gehalten wurde. Weiterhin wurde in einigen Fällen ein Füllstoff in Kombination mit Aerosil R202 verwendet. Es war stets möglich, die genannten Füllstoffe mindestens in einer Konzentration von 1,0 Masseprozent und in einigen Fällen in Konzentrationen von bis zu 50 Masseprozent in den Primer einzuarbeiten, ohne dass es zu Einbußen hinsichtlich der haftvermittelnden Wirkung kam, wobei sich diese Konzentrationsangaben des Füllstoffes auf den Feststoffanteil des Primers, also auf den Anteil ohne Lösemittel beziehen. Ein Füllstoffanteil von 50 Masseprozent bezogen auf die lösemittelfreien Anteile des Primers bedeutet somit in den Beispielen eine Konzentration von 4,66 Masseprozent, bezogen auf die gesamte Zusammensetzung des Primers, inklusive aller Lösemittel. Der Isopropanol-Anteil wird dabei um den Anteil des Füllstoffes reduziert.

Weiterhin war es möglich, den fluoreszierenden optischen Aufheller in einer funktionalen Konzentration einzuarbeiten, ohne dass es zu Einbußen hinsichtlich der haftvermittelnden Wirkung kam. Diese funktionale Konzentration wurde mit 0,5 Masseprozent, bezogen auf den lösemittelfreien Anteil des Primers gewählt.

### Vergleichsbeispiel

Zusammensetzung des Vergleichsprimers:

| Rohstoff / Komponente | Masseprozent |
|---|---|
| Primer-Haftklebstoff 4 (34,9 Gewichtsprozent Feststoffanteil) | 10,5 |
| GENIOSIL® GF 80 | 1,0 |
| Isopropanol | 88,5 |

Der Primer wurde in den folgenden Kombinationen geprüft, wobei die folgenden Ergebnisse erhalten wurden:

| Testklebeband | Substrat | Klebkraft (300mm/min) (N/cm) | | Klebkraft nach Klimalagerung (300 mm/min) (N/cm) | |
|---|---|---|---|---|---|
| | | nach 1 Stunde | nach 3 d | a) 2 Wo 85°C/ 85% rel. Feuchte | b) 2 Wo Klimawechsel |
| 1 | Glas | 5 (A) | 5 (A) | 13 (10%K | 2 (A) |
| 1 | Keramikkachel | 5 (A) | 6 (A) | 15 (10% K) | 5 (A) |
| 2 | Glas | 5 (A) | 10 (A) | 12 (10% K) | 13 (10% K) |
| 2 | Keramikkachel | 3 (A) | 5 (A) | 7 (A) | 14 (10% K) |

| | | | | | |
|---|---|---|---|---|---|
| K = Kohäsive Spaltung des Klebebandes (Die Prozentangabe bezieht sich auf den kohäsiven Anteil. Der nicht kohäsive Anteil ist der adhäsive Anteil) A = Adhäsives Ablösen des Klebebandes vom Primer oder des Primers vom Substrat | | | | | |

## Patentansprüche

1. Primer, umfassend eine in einem oder mehreren Lösemitteln gelöste oder dispergierte Mischung aus
- einem durch Copolymerisation, vorzugsweise radikalische Copolymerisation, erhaltenen Copolymerisat aus Vinylcaprolactam und/oder Vinylpyrrolidon und einem oder mehreren der folgenden Monomere:
a) einem Acrylsäureester eines linearen, primären Alkohols mit 2 bis 10 Kohlenstoffatomen im Alkylrest des Alkohols,
b) einem Acrylsäureester eines verzweigten, nichtzyklischen Alkohols mit 4 bis 12 Kohlenstoffatomen im Alkylrest des Alkohols,
c) Acrylsäure,
- einem oder mehreren organofunktionellen Silanen,
**dadurch gekennzeichnet, dass** eines der Monomere, aus denen das Copolymerisat aufgebaut ist, Butylacrylat ist.

2. Primer gemäß Anspruch 1, **dadurch gekennzeichnet, dass** das Copolymerisat ein Haftklebstoff ist.

3. Primer gemäß Anspruch 1 oder 2, **dadurch gekennzeichnet, dass** das Copolymerisat zusätzlich bis zu 10 Masseprozent weiterer copolymerisierbarer Monomere, bezogen auf die Summe der Monomere, enthält.

4. Primer gemäß einem der vorangegangenen Ansprüche, **dadurch gekennzeichnet, dass** das Copolymerisat maximal 50 Masseprozent, bevorzugt maximal 40 Masseprozent Vinylcaprolactam und/oder Vinylpyrrolidon, bezogen auf die Summe aller Monomere des Copolymerisats enthält.

5. Primer gemäß einem der vorangegangenen Ansprüche, **dadurch gekennzeichnet, dass** das Copolymerisat mindestens 10 Masseprozent, bevorzugt mindestens 20 Masseprozent Vinylcaprolactam und/oder Vinylpyrrolidon, bezogen auf die Summe aller Monomere des Copolymerisats enthält.

6. Primer gemäß einem der vorangegangenen Ansprüche, **dadurch gekennzeichnet, dass** das Copolymerisat maximal 20 Masseprozent, bevorzugt maximal 10 Masseprozent, besonders bevorzugt 0 Masseprozent Acrylsäure, bezogen auf die Summe aller Monomere des Copolymerisats enthält.

7. Primer gemäß einem der vorangegangenen Ansprüche, **dadurch gekennzeichnet, dass** das organofunktionelle Silan glycidoxy-funktionell ist.

8. Primer gemäß einem der vorangegangenen Ansprüche, **dadurch gekennzeichnet, dass** das organofunktionelle Silan amino-funktionell oder vinyl-funktionell ist.

9. Primer gemäß einem der vorangegangenen Ansprüche, **dadurch gekennzeichnet, dass** das Lösemittel Isopropanol oder ein anderer Alkohol ist oder Isopropanol oder einen anderen Alkohol enthält.

10. Primer gemäß einem der vorangegangenen Ansprüche, **dadurch gekennzeichnet, dass** die Konzentration des Copolymerisats der in dem einen oder in den mehreren Lösemitteln gelösten oder dispergierten Mischung höher ist als die des einen oder der mehreren organofunktionellen Silane.

11. Primer gemäß einem der vorangegangenen Ansprüche, **dadurch gekennzeichnet, dass** die Konzentration des Copolymerisats der in dem einem oder in den mehreren Lösemitteln gelösten oder dispergierten Mischung zwischen einschließlich 1,0 Masseprozent und einschließlich 30,0 Masseprozent, bevorzugt zwischen einschließlich 2,0 Masseprozent und einschließlich 20,0 Masseprozent, besonders bevorzugt zwischen einschließlich 3,0 Masseprozent und einschließlich 10,0 Masseprozent beträgt.

12. Primer gemäß einem der vorangegangenen Ansprüche, **dadurch gekennzeichnet, dass** die Mischung zusätzlich einen oder mehrere fluoreszierende optische Aufheller enthält.

13. Verwendung eines Primers gemäß einem der vorangegangenen Ansprüche zur Herstellung einer haftvermittelnden Schicht, bevorzugt zur Herstellung einer haftvermittelnden, funktionale Füllstoffe enthaltenden Schicht.

14. Verfahren zum Herstellen einer haftvermittelnden Schicht auf einem Substrat, umfassend
das Aufbringen eines Primers gemäß einem der vorangegangenen Ansprüche auf ein Substrat und das Verdunsten lassen des einen oder der mehreren Lösemittel.

## Claims

1. Primer comprising a mixture, in dispersion or solution in one or more solvents, of
- a copolymer obtained by copolymerization, preferably radical copolymerization, of vinylcaprolactam and/or vinylpyrrolidone and one or more of the following monomers:
a) an acrylic ester of a linear, primary alcohol having 2 to 10 carbon atoms in the alkyl radical of the alcohol,
b) an acrylic ester of a branched, noncyclic alcohol having 4 to 12 carbon atoms in the alkyl radical of the alcohol,
c) acrylic acid,
- one or more organofunctional silanes,
**characterized in that** one of the monomers of which the copolymer is constructed is butyl acrylate.

2. Primer according to Claim 1, **characterized in that** the copolymer is a pressure-sensitive adhesive.

3. Primer according to Claim 1 or 2, **characterized in that** the copolymer additionally comprises up to 10 per cent by mass of further copolymerizable monomers, based on the sum of the monomers.

4. Primer according to any of the preceding claims, **characterized in that** the copolymer contains not more than 50 per cent by mass, preferably not more than 40 per cent by mass, of vinylcaprolactam and/or vinylpyrrolidone, based on the sum of all monomers of the copolymer.

5. Primer according to any of the preceding claims, **characterized in that** the copolymer contains at least 10 per cent by mass, preferably at least 20 per cent by mass, of vinylcaprolactam and/or vinylpyrrolidone, based on the sum of all monomers of the copolymer.

6. Primer according to any of the preceding claims, **characterized in that** the copolymer contains not more than 20 per cent by mass, preferably not more than 10 per cent by mass, more preferably 0 per cent by mass, of acrylic acid, based on the sum of all monomers of the copolymer.

7. Primer according to any of the preceding claims, **characterized in that** the organofunctional silane is glycidyloxy-functional.

8. Primer according to any of the preceding claims, **characterized in that** the organofunctional silane is amino-functional or vinyl-functional.

9. Primer according to any of the preceding claims, **characterized in that** the solvent is isopropanol or another alcohol or comprises isopropanol or another alcohol.

10. Primer according to any of the preceding claims, **characterized in that** the concentration of the copolymer of the mixture in dispersion or in solution in the one solvent or in the two or more solvents is higher than that of the one or of the two or more organofunctional silanes.

11. Primer according to any of the preceding claims, **characterized in that** the concentration of the copolymer of the mixture in dispersion or in solution in the one solvent or in the two or more solvents is between 1.0 per cent by mass inclusive and 30.0 per cent by mass inclusive, preferably between 2.0 per cent by mass inclusive and 20.0 per cent by mass inclusive, more preferably between 3.0 per cent by mass inclusive and 10.0 per cent by mass inclusive.

12. Primer according to any of the preceding claims, **characterized in that** the mixture additionally comprises one or more fluorescent optical brighteners.

13. Use of a primer according to any of the preceding claims for producing an adhesion-promoting layer, preferably for producing an adhesion-promoting layer comprising functional fillers.

14. Method for producing an adhesion-promoting layer on a substrate, comprising
applying a primer according to any of the preceding claims to a substrate and allowing the solvent or the two or more solvents to evaporate.

## Revendications

1. Primaire, comprenant un mélange dissous ou dispersé dans un ou plusieurs solvants constitués
- d'un copolymère obtenu par copolymérisation, de préférence copolymérisation radicalaire, de vinylcaprolactame et/ou de vinylpyrrolidone et d'un ou de plusieurs des monomères suivants :
a) un ester de l'acide acrylique d'un alcool primaire linéaire contenant 2 à 10 atomes de carbone dans le radical alkyle de l'alcool,
b) un ester de l'acide acrylique d'un alcool non cyclique ramifié contenant 4 à 12 atomes de carbone dans le radical alkyle de l'alcool,
c) de l'acide acrylique,
- un ou plusieurs silanes organofonctionnels, **caractérisé en ce qu'**un des monomères à partir desquels le copolymère est formé est l'acrylate de butyle.

2. Primaire selon la revendication 1, **caractérisé en ce que** le copolymère est un adhésif de contact.

3. Primaire selon la revendication 1 ou 2, **caractérisé en ce que** le copolymère contient en outre jusqu'à 10 pour cent en masse d'autres monomères copolymérisables, par rapport à la somme des monomères.

4. Primaire selon l'une quelconque des revendications précédentes, **caractérisé en ce que** le copolymère contient au plus 50 pour cent en masse, de préférence au plus 40 pour cent en masse, de vinylcaprolactame et/ou de vinylpyrrolidone, par rapport à la somme de tous les monomères du copolymère.

5. Primaire selon l'une quelconque des revendications précédentes, **caractérisé en ce que** le copolymère contient au moins 10 pour cent en masse, de préférence au moins 20 pour cent en masse de vinylcaprolactame et/ou de vinylpyrrolidone, par rapport à la somme de tous les monomères du copolymère.

6. Primaire selon l'une quelconque des revendications précédentes, **caractérisé en ce que** le copolymère contient au plus 20 pour cent en masse, de préférence au plus 10 pour cent en masse, de manière particulièrement préférée 0 pour cent en masse, d'acide acrylique, par rapport à la somme de tous les monomères du copolymère.

7. Primaire selon l'une quelconque des revendications précédentes, **caractérisé en ce que** le silane organofonctionnel est glycidoxy-fonctionnel.

8. Primaire selon l'une quelconque des revendications précédentes, **caractérisé en ce que** le silane organofonctionnel est amino-fonctionnel ou vinylefonctionnel.

9. Primaire selon l'une quelconque des revendications précédentes, **caractérisé en ce que** le solvant est l'isopropanol ou un autre alcool ou contient de l'isopropanol ou un autre alcool.

10. Primaire selon l'une quelconque des revendications précédentes, **caractérisé en ce que** la concentration du copolymère du mélange dissous ou dispersé dans le ou les solvants est supérieure à celle du ou des silanes organofonctionnels.

11. Primaire selon l'une quelconque des revendications précédentes, **caractérisé en ce que** la concentration du copolymère du mélange dissous ou dispersé dans le ou les solvants est comprise entre 1,0 pour cent en masse inclus et 30,0 pour cent en masse inclus, de préférence entre 2,0 pour cent en masse inclus et 20,0 pour cent en masse inclus, de manière particulièrement préférée entre 3,0 pour cent en masse inclus et 10,0 pour cent en masse inclus.

12. Primaire selon l'une quelconque des revendications précédentes, **caractérisé en ce que** le mélange comprend en outre un ou plusieurs azurants optiques fluorescents.

13. Utilisation d'un primaire selon l'une quelconque des revendications précédentes pour la fabrication d'une couche de promoteur d'adhésion, de préférence pour la fabrication d'une couche de promoteur d'adhésion contenant des charges fonctionnelles.

14. Procédé de préparation d'une couche de promoteur d'adhésion sur un substrat, comprenant l'application d'un primaire selon l'une quelconque des revendications précédentes sur un substrat et l'évaporation du ou des solvants.
